# EUROPEAN PATENT APPLICATION

(11) **EP 1 748 622 A1**
(43) Date of publication of application: **31.01.2007**
(21) Application number: 06253820.2
(22) Date of filing: 20.07.2006
(51) Int. Cl.: H04L 29/06

(54) **Communication system, communication apparatus, communication method, communication control method, communication control program and program storage medium**

(30) Priority: 27.07.2005 JP 2005217807
(71) Applicant: SONY CORPORATION, Tokyo 141 (JP)
(72) Inventor: Sugi, Junjiro, c/o Sony Corporation, Tokyo 141 (JP)
(74) Representative: DeVile, Jonathan Mark

(57) **Abstract**

A communication control method for controlling communication apparatus for communicating in conformity with predetermined communication standards among a plurality of communication apparatus by setting predetermined system information common to the communication apparatus. The communication apparatus communicates with another communication apparatus having an authentication processing means for executing an authentication process in accordance with authentication information. A state is established in which an output level of a transmission signal is lowered and data having a reception signal level lower than a predetermined value is discarded and by setting common system information. A signal representative of a connection start is transmitted based on the common system information. In response to the connection start signal, authentication information is transmitted, new system information is authenticated by the authentication processing means, the received new system information is set and communication based on the new system information is performed.

## Description

### Background of the Invention

### Field of the Invention

The present invention relates to communications systems for communicating in accordance with predetermined communications standards among a plurality of communication apparatus by setting predetermined system information to the communication apparatus.

The present invention relates to a communication system, a communication apparatus, a communication method, a communication control method, a communication control program, and a program storage medium, respectively for wireless communication among a plurality of communication apparatus.

### Description of Related Art

Wireless local area network (LAN) communication is recently used for communication among a plurality of information processing terminals. In order to use wireless LAN communication, it becomes necessary to set identification information for identifying a wireless LAN, to authenticate at the start of connection, and to set security information for encrypting data communication to follow. Various security scheme standards have been used conventionally, such as a wired equivalent privacy (WEP) scheme in conformity with IEEE802.11 regulations and a common key scheme in conformity with IEEE802.11i regulations.

Refer to Japanese Patent Application Publication No. 2001-358966, the contents of which are incorporated herein by reference.

### Summary of the Invention

Various aspects and features of the present invention are defined in the appended claims.

Since wireless communication uses radio waves, it is difficult to limit a communication range. There is a danger that a malicious third party taps illegally wireless communication from a physically remote location, if a high performance antenna and wireless communication apparatus is used. In order to hinder illegal access by communication tapping of this kind, wireless LAN communication has conventionally used security scheme standards such as a wired equivalent privacy (WEP) scheme in conformity with IEEE802.11 regulations and a common key scheme in conformity with IEEE802.11i regulations. However, algorithms of authentication and encryption of this type are analyzed in some cases by malicious third parties, leaving a danger of illegal access of communication data.

These security schema require that users should set information necessary for authentication and encryption to both information processing terminals for wireless communication, before wireless LAN communication starts. It is also necessary to set service set identifier (SSID) information for identifying wireless LANs to be used for communication to both information processing terminals. In order to conduct these settings, it is necessary for a network manager to notify users of necessary information in advance, by using documents, network lines or the like. This work is very inconvenient. In order to eliminate this inconvenience, it is desired to provide a simpler information setting method.

The present invention has been proposed by considering the above-described circumstances. According to embodiments of the present invention, there are provided a communication system, a communication apparatus, a communication method, a communication control method, a communication control program, and a program storage medium, respectively capable of allowing users to perform communication connection settings safely and easily at a location which limits persons to enter.

According to an embodiment, the present invention provides a communication system for performing communication in conformity with predetermined communication standards among a plurality of communication apparatus by setting predetermined system information to the communication apparatus, the communication system comprising: a first communication apparatus comprising: communication control means for setting system information to allow communication; communication means for performing communication based on the system information set by the communication control means; authentication information generating means for generating authentication information for communication; authentication information providing means for providing a user with the authentication information in a recognizable state; and authentication processing means for executing an authentication process in accordance with the authentication information provided by the authentication information providing means; and a second communication apparatus comprising: communication control means for setting system information to allow communication; communication means for performing communication based on the system information set by the communication control means; and authentication input means for inputting the authentication information, wherein: in the first communication apparatus, the communication control means makes the communication means in a communicable state by making setting of lowering an output level of a transmission signal and discarding reception data having a reception signal level lower than a predetermined value and by making setting of common setting system information; the authentication information generating means generates the authentication information and the authentication information providing means provides a user with the authentication information in a recognizable state when the communication means receives a signal representative of a connection start from the second communication apparatus through communication based upon the common system information; the authentication processing means executes an authentication process by using the authentication information sent from the second communication apparatus via the communication means through communication based upon the common system information and the provided authentication information; new system information is transmitted via the communication means to the second communication apparatus authenticated by the authentication processing means through communication based on the common system information, the transmitted new system information is set; and communication based on the new system information is performed with the second communication apparatus via the communication means; and in the second communication apparatus, the communication control means makes the communication means in a communicable state by making setting of lowering an output level of a transmission signal and discarding reception data having a reception signal level lower than a predetermined value and by making setting of common setting system information; the signal representative of the connection start is transmitted to the first communication apparatus via the communication means through communication based on the common system information; the authentication information input by the authentication information input means is transmitted to the first communication apparatus via the communication means; the new system information authenticated by the authentication information and sent from the first communication apparatus is received via the communication means, the received new system information is set; and communication based on the new system information is performed with the first communication apparatus via the communication means.

According to an embodiment, the present invention provides a communication apparatus in a communication system for performing communication in conformity with predetermined communication standards among a plurality of communication apparatus by setting predetermined system information common to the communication apparatus, the communication apparatus comprising: communication control means for setting system information to allow communication; communication means for performing communication based on the system information set by the communication control means; authentication information generating means for generating authentication information for communication; authentication information providing means for providing a user with the authentication information in a recognizable state; and authentication processing means for executing an authentication process in accordance with the authentication information provided by the authentication information providing means, wherein: the communication control means makes the communication means in a communicable state by making setting of lowering an output level of a transmission signal and discarding reception data having a reception signal level lower than a predetermined value and by making setting of common setting system information; the authentication information generating means generates the authentication information and the authentication information providing means provides a user with the authentication information in a recognizable state when the communication means receives a signal representative of a connection start from another communication apparatus through communication based upon the common system information; the authentication processing means executes an authentication process by using the authentication information sent from the other communication apparatus via the communication means through communication based upon the common system information and the provided authentication information; new system information is transmitted via the communication means to the other communication apparatus authenticated by the authentication processing means through communication based on the common system information, the transmitted new system information is set; and communication based on the new system information is performed with the other communication apparatus via the communication means.

According to an embodiment, the present invention provides a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means, the communication apparatus comprising: communication control means for setting system information to allow communication; communication means for performing communication based on the system information set by the communication control means; and authentication input means for inputting the authentication information, wherein: the communication control means makes the communication means in a communicable state by making setting of lowering an output level of a transmission signal and discarding reception data having a reception signal level lower than a predetermined value and by making setting of common setting system information; a signal representative of a connection start is transmitted to the other communication apparatus via the communication means through communication based on the common system information; the authentication information input by the authentication information input means is transmitted to the other communication apparatus via the communication means; the new system information authenticated by the authentication information and sent from the other communication apparatus is received via the communication means, the received new system information is set; and communication based on the new system information is performed via the communication means.

According to an embodiment, the present invention provides a communication method for a communication system for performing communication in conformity with predetermined communication standards among a plurality of communication apparatus by setting predetermined system information common to the communication apparatus, wherein: a first communication apparatus enters a communicable state by making setting of lowering an output level of a transmission signal and discarding reception data having a reception signal level lower than a predetermined value and by making setting of common setting system information; generates the authentication information and provides a user with the authentication information in a recognizable state when receiving a signal representative of a connection start from a second communication apparatus through communication based upon the common system information; executes an authentication process by using the authentication information sent from the second communication apparatus through communication based upon the common system information and the provided authentication information; transmits new system information to the authenticated second communication apparatus through communication based on the common system information, sets the transmitted new system information; and performs communication with the second communication apparatus based on the new system information; and the second communication apparatus enters a communicable state by making setting of lowering an output level of a transmission signal and discarding reception data having a reception signal level lower than a predetermined value and by making setting of common setting system information; transmits the signal representative of the connection start to the first communication apparatus through communication based on the common system information; transmits the authentication information input to the first communication apparatus; receives the new system information authenticated by the authentication information and sent from the first communication apparatus, sets the received new system information; and performs communication with the second communication apparatus through communication based on the new system information.

According to an embodiment, the present invention provides a communication control method for a communication apparatus in a communication system for performing communication in conformity with predetermined communication standards among a plurality of communication apparatus by setting predetermined system information common to the communication apparatus, wherein: a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon the common system information; an authentication process is executed by using the authentication information sent from the other communication apparatus through communication based upon the common system information and the provided authentication information; new system information is transmitted to the authenticated other communication apparatus through communication based upon the common system information, the transmitted new system information is set; and communication based on the new system information is performed with the other communication apparatus.

According to an embodiment, the present invention provides a communication control method for a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means, wherein: a communicable state is established by making setting of lowering an output level of a transmission signal and discarding reception data having a reception signal level lower than a predetermined value and by making setting of common setting system information; a signal representative of a connection start is transmitted through communication based on the common system information; the authentication information input is transmitted; new system information authenticated by the authentication information is received; the received new system information is set; and communication based on the new system information is performed.

According to an embodiment, the present invention provides a communication control program to be executed by a computer installed in a communication apparatus in a communication system for performing communication in conformity with predetermined communication standards among a plurality of communication apparatus by setting predetermined system information common to the communication apparatus, the computer executing communication control wherein: a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon the common system information; an authentication process is executed by using the authentication information sent from the other communication apparatus through communication based upon the common system information and the provided authentication information; new system information is transmitted to the authenticated other communication apparatus through communication based upon the common system information, the transmitted new system information is set; and communication based on the new system information is performed with the other communication apparatus.

According to an embodiment, the present invention provides a communication control program to be executed by a computer installed in a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means, the computer executing communication control wherein: a communicable state is established by making setting of lowering an output level of a transmission signal and discarding reception data having a reception signal level lower than a predetermined value and by making setting of common setting system information; a signal representative of a connection start is transmitted through communication based on the common system information; the authentication information input is transmitted; new system information authenticated by the authentication information is received; the received new system information is set; and communication based on the new system information is performed.

According to an embodiment, the present invention provides a program storage medium storing a communication control program to be executed by a computer installed in a communication apparatus in a communication system for performing communication in conformity with predetermined communication standards among a plurality of communication apparatus by setting predetermined system information common to the communication apparatus, the program storage medium storing the communication control program in a state readable and executable by the computer, wherein: a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon the common system information; an authentication process is executed by using the authentication information sent from the other communication apparatus through communication based upon the common system information and the provided authentication information; new system information is transmitted to the authenticated other communication apparatus through communication based upon the common system information, the transmitted new system information is set; and communication based on the new system information is performed with the other communication apparatus.

According to an embodiment, the present invention provides a program storage medium storing a communication control program to be executed by a computer installed in a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means, the program storage medium storing the communication control program in a state readable and executable by the computer, wherein: a communicable state is established by making setting of lowering an output level of a transmission signal and discarding reception data having a reception signal level lower than a predetermined value and by making setting of common setting system information; a signal representative of a connection start is transmitted through communication based on the common system information; the authentication information input is transmitted; new system information authenticated by the authentication information is received; the received new system information is set; and communication based on the new system information is performed.

In the wireless communication system of the present invention, communication starts in a limited communication range by lowering a transmission output of a communication apparatus. By limiting an arrival range of wireless communication radio waves, a danger of illegal accesses to the network by third parties can be alleviated. In the wireless communication system, after communication starts, the first communication apparatus supplies a user with authentication information, and the user inputs the authentication information to the second communication apparatus to complete authentication. If a radio wave arrival range cannot be limited sufficiently to the extent that the system can be protected from illegal accesses, the authentication method, by which a user inputs the authentication information supplied from the first communication apparatus to the second communication apparatus, becomes supplemental to the above-described method of lowering the communication output, and data communication can be performed safely relative to the authentication method of conventional wireless communication standards. In contrast to the conventional supply of system information by documents or Internet lines or the like, since the system information is shared after authentication completion and data communication becomes possible, a user can complete setting of system information more easily.

### Brief Description of the Drawings

The invention will now be described by way of example with reference to the accompanying drawings, throughout which like parts are referred to by like references, and in which:
Fig. 1 is a schematic diagram showing a wireless LAN system;
Fig. 2 is a block diagram showing the structure of a base unit;
Fig. 3 is a block diagram showing the structure of a monitor unit;
Fig. 4 is a block diagram showing the structure of a wireless LAN communication unit; and
Fig. 5 is a flow chart illustrating a wireless LAN system information setting processing.

### Description of the Preferred Embodiments

A wireless LAN system adopting the present invention will be described in detail with reference to the accompanying drawings.

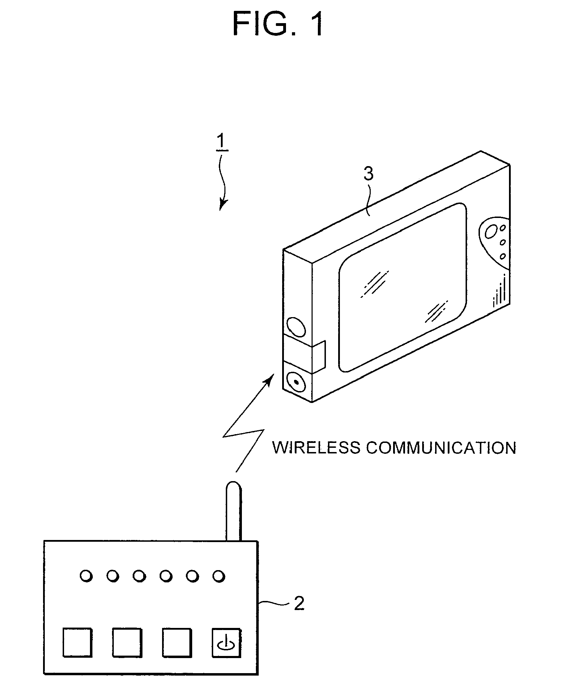

Fig. 1 is a diagram showing the configuration of a wireless LAN system 1 adopting the present invention.

As shown in Fig. 1, the wireless LAN system 1 is constituted of a base unit 2 which is a communication apparatus having a wireless LAN communication means, and a monitor unit 3 for communicating with the base unit 2 via the wireless communication means and displaying image data in communication data.

In this embodiment, although it is assumed that image data is transmitted from the base unit 2 to the monitor unit 3 and the monitor unit 3 displays the image data, the embodiment is not limited thereto, but audio data may be transmitted in a wireless LAN communication system using a combination of the monitor unit 3 and a speaker.

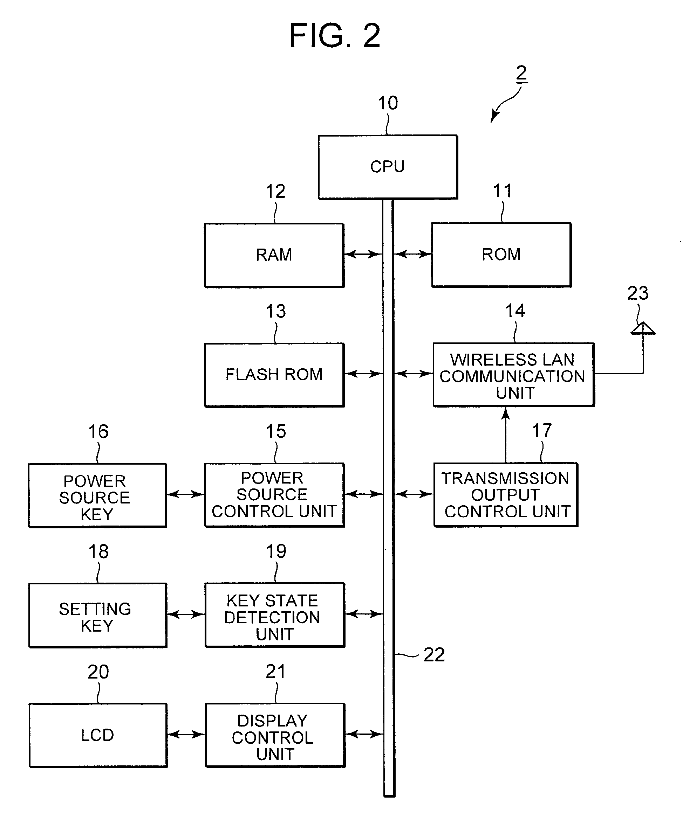

Next, the structure of the base unit 2 will be described with reference to Fig. 2.

As shown in Fig. 2, the base unit 2 is constituted of: a central processing unit (CPU) 10 for performing a predetermined arithmetic and logical operation; a read-only memory (ROM) 11 for storing various control programs and the like; a random access memory (RAM) 12 as a working memory for CPU 10; a flash ROM 13 for storing predetermined wireless LAN system information; a wireless LAN communication unit 14 for communicating with the monitor unit 3; a power source control unit 15 for controlling on/off of a main power source of the base unit 2; a power source key 16 for inputting an on/off signal to the power source control unit 15; a transmission output control unit 17 for controlling a transmission output of the wireless LAN communication unit 14; a key state detection unit 19 for detecting a state of a setting key 18 disposed in the base unit 2 at a predetermined position; a light emitting diode (LED) 19 for displaying information regarding authentication setting of the wireless LAN system and the like to be presented to users; and a display control unit 21 for controlling display of LED 20, these components being interconnected by a bus 22.

CPU 10 executes various control processes in accordance with various control commands and various data supplied from the monitor unit 3 via the wireless LAN communication unit 14, or various programs stored in ROM 11.

The wireless LAN communication unit 14 starts communication with the monitor unit 3 by using preset wireless LAN system information. As the wireless LAN communication unit receives, via an antenna 23 connected thereto, various control commands and various data transmitted from the monitor unit 3, the wireless LAN communication unit sends the received commands and data to CPU 10 via the bus 22.

As a user depresses the power source key 16 disposed in the base unit 2 at a predetermined position, the power source control unit 15 controls a power source circuit (not shown) to start/stop a supply of drive current to each circuit and turn on/off the main power source of the base unit 2.

The key state detection unit 19 monitors always the state of the setting key 18. As a user depresses the setting key 18, this depression is notified to CPU 10. As this depression is notified to CPU 10, CPU 10 reads the wireless LAN system information setting program stored in ROM 11, and sets the wireless LAN system information to the wireless LAN communication unit 14, in accordance with a command written in the wireless LAN system information setting program.

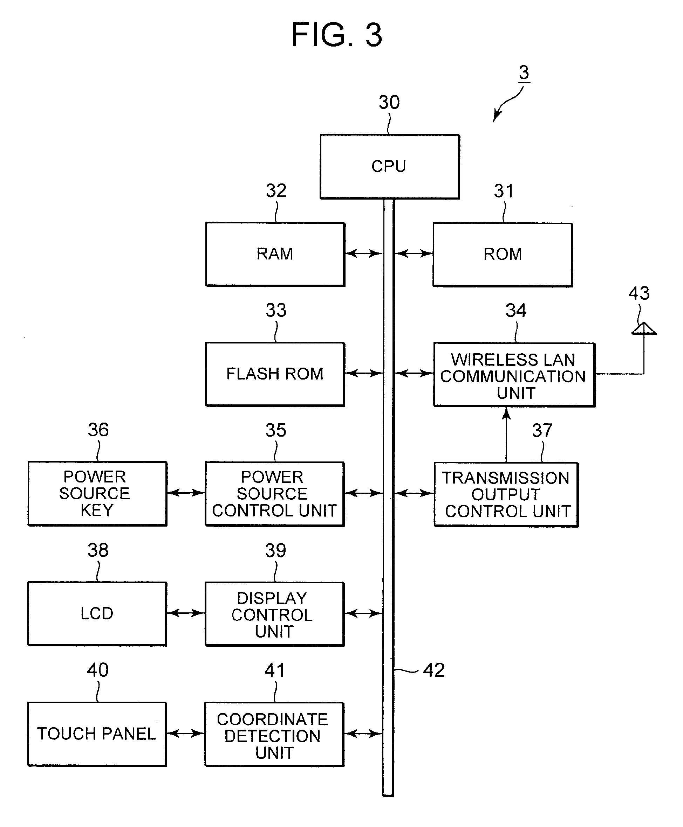

Next, the structure of the monitor unit 3 will be described with reference to Fig. 3.

As shown in Fig. 3, the monitor unit 3 is constituted of: a CPU 30 for performing a predetermined arithmetic and logical operation; a ROM 31 for storing various control programs and the like; a RAM 32 as a working memory for CPU 30; a flash ROM 33 for storing predetermined wireless LAN system information regarding the monitor unit 3; a wireless LAN communication unit 34 for communicating with the base unit 2: a power source control unit 35 for controlling on/off of a main power source of the monitor unit 3; a power source key 36 for inputting an on/off signal to the power source control unit 35; a transmission output control unit 37 for controlling a transmission output of the wireless LAN communication unit 34; a display control unit 39 for controlling a liquid crystal display (LCD) 38; a touch panel 40 disposed on LCD 38; and a coordinate detection unit 41 for detecting a coordinate position designated by a user by operating the touch panel 40, these components being interconnected by a bus 42.

CPU 30 executes various control processes in accordance with various control commands supplied from the base unit 3 via the wireless LAN communication unit, or various programs stored in ROM 31.

The wireless LAN communication unit 34 receives, via an antenna 43 connected thereto, various control commands transmitted from the base monitor unit 3, by using preset wireless LAN system information, and sends the received commands to CPU 30 via the bus 42.

The power source control unit 35 monitors always whether a user depresses the power source key 36 disposed in the monitor unit 3 at a predetermined position. As the power source key 36 is depressed, the power source control unit 35 controls a power source circuit (not shown) to start/stop a supply of drive current to each circuit and turn on/off the main power source of the monitor unit 3.

In the state that wireless LAN system information necessary for connection and data communication with the base unit 2 to the wireless LAN communication unit 34, for example, CPU 30 supplies the display control unit 39 with image data basing upon the various control programs stored in ROM 31 to display on LCD 38 a predetermined graphical user interface (GUI) screen for wireless LAN system information setting.

As the GUI screen is displayed on LCD 38, CPU 30 recognizes an input indicating setting of the wireless LAN system, from a detection result by the coordinate detection unit 41, reads the wireless LAN system information setting program stored in ROM 31, and sets the wireless LAN system information to the wireless LAN communication unit 34 in accordance with a command written in the wireless LAN system information setting program.

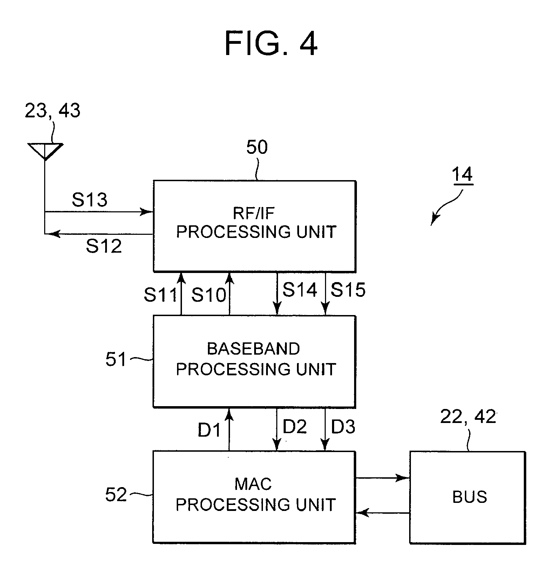

Fig. 4 shows the specific structure of the wireless LAN communication unit 14 of the base unit 2.

As shown in Fig. 4, the wireless LAN communication unit 14 is constituted of a radio frequency (RF)/intermediate frequency (IF) processing unit 50, a baseband processing unit 51, and a media access control (MAC) processing unit 52.

First, a transmission process will be described. The MAC processing unit 52 executes a predetermined MAC process for various data supplied via the bus 21, the MAC process including an encryption process based on encryption information contained in the wireless LAN system information, frame format conversion, send timing control and the like, and sends obtained frame data D1 to the baseband processing unit 51.

The baseband processing unit 51 modulates the supplied frame data D into an IQ signal S10 and sends the IQ signal S10 to the RF/IF processing unit 50. The baseband processing unit 51 sends a transmission output control signal S11 corresponding to a transmission output level set to the MAC processing unit 52, to the RF/IF processing unit 50 to thereby set the gain of an amplifier (not shown) in the RF/IF processing unit 50 to a value corresponding to the transmission output level.

The RF/IF processing unit 50 converts the IQ signal S10 supplied from the baseband processing unit 51 into an intermediate frequency (IF) signal, upconverts it to a radio frequency (RF) signal, amplifies the RF signal S12 and transmits it to the communication partner monitor unit 3 via the antennal 23.

Next, a reception process will be described. As the antenna 23 receives a signal transmitted from the communication partner monitor unit 3, the RF/IF processing unit 50 downconverts the received RF signal S13 into an IF signal, converts the IF signal further into an IQ signal S14, and sends it to the baseband processing unit 51. The RF/IF processing unit 50 sends as a detection signal S15 a detection result by an internal detection circuit (not shown) to the baseband processing unit 51.

The baseband processing unit 51 demodulates the IQ signal S14 sent from the RF/IF processing unit 50, and sends obtained frame data D2 to the MAC processing unit 52. In this case, the baseband processing unit detects a received signal strength indicator (RSSI) value representative of an intensity of a received signal (i.e., received RF signal) from the detection signal S15 supplied from the RF/IF processing unit 50, and sends as RSSI value information D3 the RSSI value to the MAC processing unit 52.

The MAC processing unit 52 decodes the frame data D2 supplied from the baseband processing unit 51 in accordance with the encryption information contained in the wireless LAN communication system information, extracts necessary data, and sends the necessary data to corresponding blocks such as CPU 10 via the bus 22. In this case, if the RSSI value of the received signal to be recognized from the RSSI value information D3 is smaller than a predetermined value set beforehand by CPU 10 or CPU 30, the wireless LAN communication unit 14 discards the frame data D2.

As described above, the wireless LAN communication unit 14 can communicate with the communication partner in conformity with communication standards, while frame data having a low signal level is discarded when necessary.

The wireless LAN communication unit 34 of the monitor unit 3 has a similar structure to that of the above-described wireless LAN communication unit 14, and performs a transmission/reception process similar to that described above.

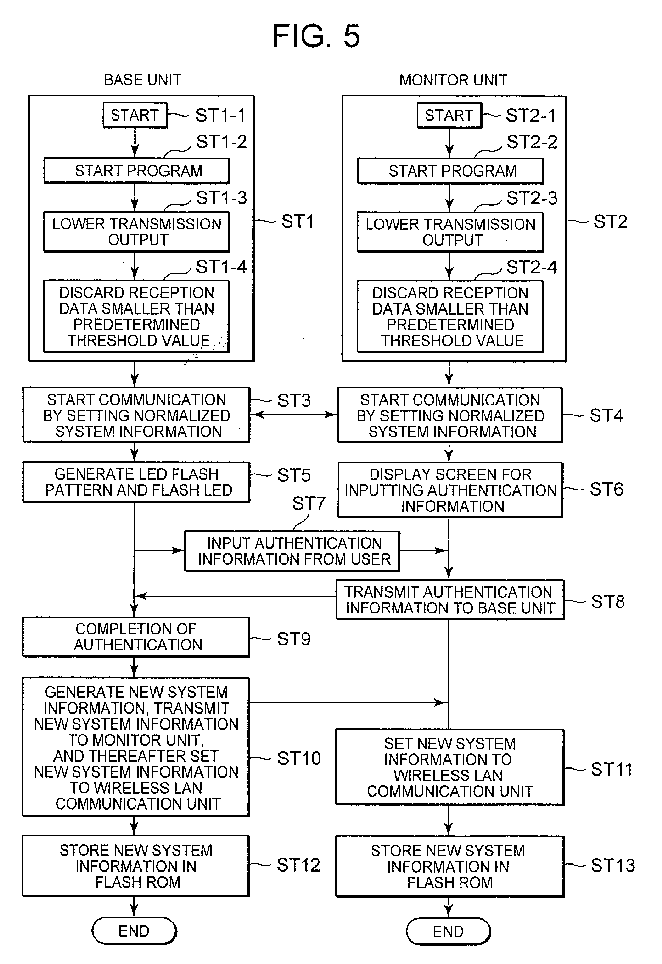

Next, with reference to Fig. 5, description will be made on a setting process for the wireless LAN system 1 to be executed by the base unit 2 and monitor unit 3.

Communication is established between the base unit 2 and monitor unit 3 of the wireless LAN system 1, by depressing the setting key 17 of the base unit 2, displaying a predetermined GUI screen on LCD 38 and touching the touch panel 40 at a predetermined position. The base unit 2 and monitor unit 3 have a wireless LAN information setting function installed therein for sharing the wireless LAN system information and setting this information to the wireless LAN communication units 14 and 34. In the flow chart shown in Fig. 5, the left portion shows a temporal flow of the operation of the base unit 2 based on the statement of the wireless LAN system information setting program, and the right portion shows a temporal flow of the operation of the monitor unit 3 based on the statement of the wireless LAN system information setting program.

Step ST1 sets the wireless LAN communication unit 14 of the base unit 2.

At Step ST1-1 the key state detection unit 19 notifies CPU 10 of the base unit 2 of an event that a user depressed the setting key 18 to activate the wireless LAN system information setting program.

Upon notification of the event of activating the wireless LAN system information setting program from the key state detection unit 9, at Step ST1-2 CPU 10 reads the wireless LAN system information setting program from ROM 11 and develops it in RAM 12.

At Step ST1-3 CPU 10 sets a predetermined value to the MAC processing unit 52 of the wireless LAN communication unit 14 to lower the output level of a transmission signal to a predetermined minimum level, in accordance with a command written in the wireless LAN system information setting program.

At Step ST1-4 CPU 10 sets the wireless LAN communication unit 14 in such a manner that reception data having a signal level smaller than a predetermined threshold value is discarded, in accordance with a command written in the wireless LAN system information setting program. Specifically, CPU 10 sets a predetermined value to the MAC processing unit 52 of the wireless LAN communication unit 14, as the lower limit value of the RSSI value of a reception signal always detected by the wireless LAN communication unit 14.

Similar to the base unit 2, Step ST2 sets the wireless LAN communication unit 34 of the monitor unit 3.

At Step ST2-1 the coordinate detection unit 41 notifies CPU 10 of the monitor unit 3 of an event that a user touched the touch panel 40 to set the wireless LAN system information.

Upon recognition of the notice from the coordinate detection unit 41, at Step ST2-2 CPU 30 reads the wireless LAN system information setting program from ROM 31 and develops it in RAM 32.

At Step ST2-3 CPU 30 sets a predetermined value to the MAC processing unit 52 of the wireless LAN communication unit 34 to lower the output level of a transmission signal to a predetermined minimum level, in accordance with a command written in the wireless LAN system information setting program.

At Step ST2-4 CPU 30 sets the wireless LAN communication unit 34 in such a manner that reception data having a signal level smaller than a predetermined threshold value is discarded, in accordance with a command written in the wireless LAN system information setting program.

As described above, the wireless LAN communication units 14 and 34 perform setting for lowering a reception signal output level to prevent a malicious third party from tapping communication.

When the wireless LAN system information is set to the base unit 2 and monitor unit 3 of the wireless LAN system 1, a transmission output is suppressed to limit a radio wave arrival distance on the assumption that the base unit 2 and monitor unit 3 are located at a very near distance. The base unit 2 and monitor unit 3 receive only data considered to be transmitted from a vary near distance and discard other data, to thereby improve security when the wireless LAN system 1 is set.

Accordingly, the wireless LAN communication units 14 and 34 monitor always the RSSI value of a reception signal, receive data having the RSSI value equal to or larger than the values set by the CPU 10 and CPU 30 and discard other data.

The wireless LAN communication system starts communication after the above-described communication setting at the wireless LAN communication units 14 and 34 is completed.

At Step ST3 after Step ST1, CPU 10 of the base unit 2 sets normalized wireless LAN system information to the MAC processing unit 52 of the wireless LAN communication unit 14 and stands by until the monitor unit 3 is connected, in accordance with a command written in the wireless LAN system information setting program.

At Step ST4 CPU 30 of the monitor unit 3 sets normalized wireless LAN system information to the MAC processing unit 52 of the wireless LAN communication unit 34 and starts communicating with the base unit 2.

After the base unit 2 and monitor unit 3 are connected, at Step ST5 CPU 10 of the base unit 2 generates a flash pattern for flashing LED 20, and supplies the display control unit 21 with the generated flash pattern as authentication information to flash LED 20, in accordance with a command written in the wireless LAN system information setting program.

As a method of making a user recognize authentication information, the method is not limited only to the flash pattern of LED 20, but buzzer sounds may also be used.

At Step ST6 CPU 30 of the monitor unit 3 makes the display control unit 39 display a screen to be used by a user to input authentication information, in accordance with a command written in the wireless LAN system information setting program.

As the authentication information setting screen is displayed on the monitor unit 3, at Step ST7 the user inputs information basing upon the flash pattern supplied from the base unit 2 by using an input means such as the touch panel 34 of the monitor unit 2, in accordance with the input screen of LCD 38.

At Step ST8 CPU 30 transmits the authentication information input by the user to the wireless LAN communication unit 14 of the base unit 2, in accordance with a command written in the wireless LAN system information setting program.

Upon reception of the authentication information via the wireless LAN communication unit 14, at Step ST9 CPU 10 of the base unit 2 completes authentication between the base unit 2 and monitor unit 3, in accordance with a command written in the wireless LAN system information setting program. In this case, CPU 10 of the base unit 2 executes the authentication process by referring to the authentication information generated at ST5 and the authentication information received at the monitor unit 3.

As the authentication between the base unit 2 and monitor unit 3 is completed, at Step ST10 CPU 10 of the base unit 2 generates new system information, transmits the new system information to the monitor unit 3 via the wireless LAN communication unit 14, and thereafter sets the new system information to the MAC processing unit 52 of the wireless LAN communication unit 14, in accordance with a command written in the wireless LAN system information setting program. The normalized wireless LAN system information is information for communication among many and unspecified communication apparatus, whereas the new system information is information for limited communication between the base unit 2 and monitor unit 3.

As the monitor unit 3 receives the new information from the base unit 2, at Step ST11 CPU 30 sets the received new system information to the MAC processing unit 52 of the wireless LAN communication unit 34, in accordance with a command written in the wireless LAN system information setting program.

After the new system information is set to the MAC processing units 52 of the wireless LAN communication units 14 and 34, setting a series of above-described system information is completed and substantial communication starts between the base unit 2 and monitor unit 3.

At Step ST12 after Step ST10, CPU 10 of the base unit 2 stores the new system information in the flash ROM 13, in accordance with a command written in the wireless LAN system information setting program.

At Step ST13 after Step ST11, CPU 30 of the monitor unit 3 stores the new system information in the flash ROM 33, in accordance with a command written in the wireless LAN system information setting program.

Since the system information for establishing connection is stored in the flash ROMs 13 and 33 and the connection setting is performed once, the wireless LAN system 1 can perform wireless communication without performing again the connection setting, when the base unit 2 and monitor unit 3 are activated again.

In the above-described embodiment, although system information is generated newly at ST10, the embodiment is not limited thereto. For example, system information may be stored in advance in the flash ROM 13 of the base unit, and this information is transmitted as the new system information to the monitor unit 3. In this manner, the new system information is shared by the base unit 2 and monitor unit 3 and set to the wireless LAN communication units 14 and 34 of the base unit 2 and monitor unit 3.

As described above, if it is difficult to limit a radio wave arrival distance, the authentication method, by which a user inputs information basing upon the flash pattern of LED 20 of the base unit to the monitor unit, becomes supplemental to the above-described method of lowering the output level, and the wireless LAN system 1 can be set more safely.

The present invention is not limited only to the above-described embodiments, but it is obvious that various modifications are possible without departing from the gist of the present invention as defined by the appended claims.

The present invention contains subject mater related to Japanese Patent Application No. JP2005-217807 filed in the Japanese Patent Office on July 27, 2005, the entire contents of which being incorporated herein by reference.

Various respective aspects and features of the invention are defined in the appended claims. Features from the dependent claims may be combined with features of the independent claims as appropriate and not merely as explicitly set out in the claims.

## Claims

1. A communication system for performing communication in conformity with predetermined communication standards among a plurality of communication apparatus by setting predetermined system information to the communication apparatus, the communication system comprising:
a first communication apparatus having communication control means for setting system information to allow communication, communication means for performing communication based on said system information set by said communication control means, authentication information generating means for generating authentication information for communication, authentication information providing means for providing a user with said authentication information in a recognizable state, and authentication processing means for executing an authentication process in accordance with said authentication information provided by said authentication information providing means; and
a second communication apparatus having communication control means for setting system information to allow communication, communication means for performing communication based on said system information set by said communication control means, and authentication information input means for inputting said authentication information;
wherein, in said first communication apparatus, said communication control means makes said communication means in a communicable state by making setting of lowering an output level of a transmission signal and discarding reception data having a reception signal level lower than a predetermined value and by making setting of common setting system information, said authentication information generating means generates said authentication information and said authentication information providing means provides a user with said authentication information in a recognizable state when said communication means receives a signal representative of a connection start from said second communication apparatus through communication based upon said common system information, said authentication processing means executes an authentication process by using said authentication information sent from said second communication apparatus via said communication means through communication based upon said common system information and said provided authentication information, new system information is transmitted via said communication means to said second communication apparatus authenticated by said authentication processing means through communication based on said common system information, said transmitted new system information is set, and communication based on said new system information is performed with said second communication apparatus via said communication means; and
wherein, in said second communication apparatus, said communication control means makes said communication means in a communicable state by making setting of lowering an output level of a transmission signal and discarding reception data having a reception signal level lower than a predetermined value and by making setting of common setting system information, said signal representative of the connection start is transmitted to said first communication apparatus via said communication means through communication based on said common system information, said authentication information input by said authentication information input means is transmitted to said first communication apparatus via said communication means, said new system information authenticated by said authentication information and sent from said first communication apparatus is received via said communication means, said received new system information is set, and communication based on said new system information is performed with said first communication apparatus via said communication means.

2. The communication system according to claim 1, wherein said system information and said authentication information are identification information and information on communication encryption of a network, being common in said network.

3. A communication apparatus in a communication system for performing communication in conformity with predetermined communication standards among a plurality of communication apparatus by setting predetermined system information common to the communication apparatus, the communication apparatus comprising:
communication control means for setting system information to allow communication;
communication means for performing communication based on said system information set by said communication control means;
authentication information generating means for generating authentication information for communication;
authentication information providing means for providing a user with said authentication information in a recognizable state; and
authentication processing means for executing an authentication process in accordance with said authentication information provided by said authentication information providing means;
wherein said communication control means makes said communication means in a communicable state by making setting of lowering an output level of a transmission signal and discarding reception data having a reception signal level lower than a predetermined value and by making setting of common setting system information, said authentication information generating means generates said authentication information and said authentication information providing means provides a user with said authentication information in a recognizable state when said communication means receives a signal representative of a connection start from another communication apparatus through communication based upon said common system information, said authentication processing means executes an authentication process by using said authentication information sent from said other communication apparatus via said communication means through communication based upon said common system information and said provided authentication information, new system information is transmitted via said communication means to said other communication apparatus authenticated by said authentication processing means through communication based on said common system information, said transmitted new system information is set, and communication based on said new system information is performed with said other communication apparatus via said communication means.

4. The communication apparatus according to claim 3, wherein said system information and said authentication information are identification information and information on communication encryption of a network, being common in said network.

5. A communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means, the communication apparatus comprising: communication control means for setting system information to allow communication;
communication means for performing communication based on said system information set by said communication control means; and authentication input means for inputting said authentication information,
wherein said communication control means makes said communication means in a communicable state by making setting of lowering an output level of a transmission signal and discarding reception data having a reception signal level lower than a predetermined value and by making setting of common setting system information, a signal representative of a connection start is transmitted to said other communication apparatus via said communication means through communication based on said common system information, said authentication information input by said authentication information input means is transmitted to said other communication apparatus via said communication means, said new system information authenticated by said authentication information and sent from said other communication apparatus is received via said communication means, said received new system information is set, and communication based on said new system information is performed via said communication means.

6. The communication apparatus according to claim 5, wherein said system information and said authentication information are identification information and information on communication encryption of a network, being common in said network.

7. A communication method for a communication system for performing communication in conformity with predetermined communication standards among a plurality of communication apparatus by setting predetermined system information common to the communication apparatus:
wherein a first communication apparatus enters a communicable state by making setting of lowering an output level of a transmission signal and discarding reception data having a reception signal level lower than a predetermined value and by making setting of common setting system information; generates said authentication information and provides a user with said authentication information in a recognizable state when receiving a signal representative of a connection start from a second communication apparatus through communication based upon said common system information; executes an authentication process by using said authentication information sent from said second communication apparatus through communication based upon said common system information and said provided authentication information; transmits new system information to said authenticated second communication apparatus through communication based on said common system information, sets said transmitted new system information; and performs communication with said second communication apparatus based on said new system information; and
wherein said second communication apparatus enters a communicable state by making setting of lowering an output level of a transmission signal and discarding reception data having a reception signal level lower than a predetermined value and by making setting of common setting system information; transmits said signal representative of the connection start to said first communication apparatus through communication based on said common system information; transmits said authentication information input to said first communication apparatus; receives said new system information authenticated by said authentication information and sent from said first communication apparatus, sets said received new system information; and performs communication with said second communication apparatus through communication based on said new system information.

8. The communication method according to claim 7, wherein said system information and said authentication information are identification information and information on communication encryption of a network, being common in said network.

9. A communication control method for a communication apparatus in a communication system for performing communication in conformity with predetermined communication standards among a plurality of communication apparatus by setting predetermined system information common to the communication apparatus:
wherein a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon said common system information; an authentication process is executed by using said authentication information sent from said other communication apparatus through communication based upon said common system information and said provided authentication information; new system information is transmitted to said authenticated other communication apparatus through communication based upon said common system information, said transmitted new system information is set; and communication based on said new system information is performed with said other communication apparatus.

10. The communication control method according to claim 9, wherein said system information and said authentication information are identification information and information on communication encryption of a network, being common in said network.

11. A communication control method for a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means:
wherein a communicable state is established by making setting of lowering an output level of a transmission signal and discarding reception data having a reception signal level lower than a predetermined value and by making setting of common setting system information; a signal representative of a connection start is transmitted through communication based on said common system information; said authentication information input is transmitted; new system information authenticated by said authentication information is received; said received new system information is set; and communication based on said new system information is performed.

12. The communication control method according to claim 11, wherein said system information and said authentication information are identification information and information on communication encryption of a network, being common in said network.

13. A communication control program to be executed by a computer installed in a communication apparatus in a communication system for performing communication in conformity with predetermined communication standards among a plurality of communication apparatus by setting predetermined system information common to the communication apparatus:
wherein a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon said common system information; an authentication process is executed by using said authentication information sent from said other communication apparatus through communication based upon said common system information and said provided authentication information; new system information is transmitted to said authenticated other communication apparatus through communication based upon said common system information, said transmitted new system information is set; and communication based on said new system information is performed with said other communication apparatus.

14. The communication control program according to claim 13, wherein said system information and said authentication information are identification information and information on communication encryption of a network, being common in said network.

15. A communication control program to be executed by a computer installed in a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means:
wherein a communicable state is established by making setting of lowering an output level of a transmission signal and discarding reception data having a reception signal level lower than a predetermined value and by making setting of common setting system information; a signal representative of a connection start is transmitted through communication based on said common system information; said authentication information input is transmitted; new system information authenticated by said authentication information is received; said received new system information is set; and communication based on said new system information is performed.

16. The communication control program according to claim 15, wherein said system information and said authentication information are identification information and information on communication encryption of a network, being common in said network.

17. A program storage medium storing a communication control program in a readable state and executable by a computer installed in a communication apparatus in a communication system for performing communication in conformity with predetermined communication standards among a plurality of communication apparatus by setting predetermined system information common to the communication apparatus:
wherein a communicable state is established by making setting of lowering an output level of a transmission signal and discarding reception data having a reception signal level lower than a predetermined value and by making setting of common setting system information; authentication information is generated and provided to a user in a recognizable state when receiving a signal representative of a connection start from another communication apparatus through communication based upon said common system information; an authentication process is executed by using said authentication information sent from said other communication apparatus through communication based upon said common system information and said provided authentication information; new system information is transmitted to said authenticated other communication apparatus through communication based upon said common system information, said transmitted new system information is set; and communication based on said new system information is performed with said other communication apparatus.

18. The program storage medium according to claim 17, wherein said system information and said authentication information are identification information and information on communication encryption of a network, being common in said network.

19. A program storage medium storing a communication control program to be executed by a computer installed in a communication apparatus in a communication system for performing communication in conformity with predetermined communication standards among a plurality of communication apparatus by setting predetermined system information common to the communication apparatus, the communication apparatus performing communication with another communication apparatus having authentication processing means for executing an authentication process in accordance with authentication information provided by authentication information providing means:
wherein a communicable state is established by making setting of lowering an output level of a transmission signal and discarding reception data having a reception signal level lower than a predetermined value and by making setting of common setting system information; a signal representative of a connection start is transmitted through communication based on said common system information; said authentication information input is transmitted; new system information authenticated by said authentication information is received; said received new system information is set; and communication based on said new system information is performed.

20. The program storage medium according to claim 19, wherein said system information and said authentication information are identification information and information on communication encryption of a network, being common in said network.
